# EUROPEAN PATENT APPLICATION

(11) **EP 1 182 654 A2**
(43) Date of publication of application: **27.02.2002**
(21) Application number: 01203076.3
(22) Date of filing: 13.08.2001
(51) Int. Cl.: G11B 7/24

(54) **Erasable phase-change recording elements**

(30) Priority: 25.08.2000 US 648503
(71) Applicant: EASTMAN KODAK COMPANY, Rochester, New York 14650 (US)
(72) Inventor: Tyan, Yuan-Sheng, Rochester, New York 14650-2201 (US); Pan, Kee-Chaun, Rochester, New York 14650-2201 (US); Vazan, Fridrich, Rochester, New York 14650-2201 (US); Primerano, Bruno, Rochester, New York 14650-2201 (US); Farrugia, Giuseppe, Rochester, New York 14650-2201 (US); Cushman, Thomas Richard, Rochester, New York 14650-2201 (US); Olin, George Russell, Rochester, New York 14650-2201 (US)
(74) Representative: Lewandowsky, Klaus, Dipl.-Ing.

(57) **Abstract**

An optical rewritable recording element of the phase-change type having a data-stable temperature of at least 110°C, including a substrate; and a phase-change recording layer having a composition within a depicted polygon in the following ternary composition diagram of antimony, tellurium, and indium; wherein the polygon has the following vertices and corresponding coordinates are in atomic percent:

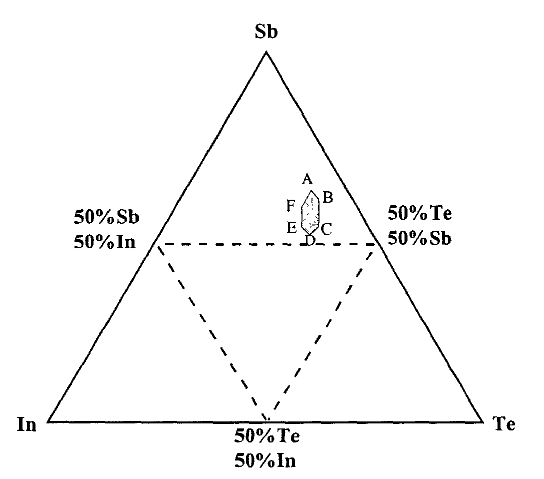

| Vertices | Coordinates | | |
|---|---|---|---|
| | In % | Te % | Sb% |
| A | 9.0 | 28.0 | 63.0 |
| B | 9.0 | 30.0 | 61.0 |
| C | 13.0 | 34.0 | 53.0 |
| D | 16.0 | 33.0 | 51.0 |
| E | 16.0 | 30.0 | 54.0 |
| F | 13.5 | 27.5 | 59.0 |

## Description

The invention relates to optical recording media of the rewriteable phase-change type with improved recording performance and improved data stability.

Optical disks utilizing focused laser beam to record and retrieve information have gained increasing commercial importance in recent years. Successful examples include the CD-family products such as CD-Audio, CD-ROM, CD-R, CD-RW, and so forth; and the DVD-family products such as DVD-Video, DVD-ROM, DVD-RAM, and DVD-RW, and so forth. The storage capacity is about 650 MB for the CD-family products and 4.7 GB for the DVD family products. Efforts are underway in the industry to increase the capacity even higher to enable products such as HDTV recording.

In almost all cases, the data recorded on the optical disk are more valuable than the physical disks. When the capacity of the disks increases, more and more valuable data are recorded on these disks. The stability of these optical disks against data loss becomes increasingly more important. General expectation on data lifetime is about 30 years for disks kept at room temperatures.

There are three main types of optical disks: (1) Read only type (ROM) has data fabricated on the disks as part of the manufacturing process, (End users can only read the data from the disks but are not able to record on them); (2) Write-once type (WORM) allows end users to record data on the disks but does not allow them to change the data once written, and (3) Rewriteable type (RW) that permits data to be written and re-written on the disk many times. The present invention deals with the rewriteable type.

There are currently two main types of RW media. The magnetooptic type that uses the change of magnetization in the recording layer to store data, and the phase-change type that uses the transition between the amorphous state and the crystalline state of the material to store data. Each type has its strengths and weaknesses. The current invention deals with the phase-change type.

Many material systems have been used for rewriteable optical recording of the phase-change type. Examples of the materials include Ge-Te, Ge-Te-Sn, Sb-Te, Sb-Ge-Te, In-Sb-Te, Sb-Te-In, and Ag-In-Sb-Te. Although this list contains many material systems with different properties there are similarities in the basic recording element layer structure and the principle of read/write operation.

In the phase-change recording process, an amorphous phase is thermodynamically unstable and it likes to crystallize to achieve thermodynamic stability. The crystallization process takes time, however. If a material is cooled rapidly from the melt and not allowed enough time to crystallize, it can be left in an amorphous phase. On the other hand, the rate of crystallization is a strong function of temperature. The higher the temperature, the higher the crystallization rates. The amorphous phase created by fast cooling can be crystallized rapidly by heating the material to higher temperatures.

When phase-change materials are used for optical recording, a focused laser beam is used to switch the material between the amorphous state and the crystalline state. During the conventional recording process, the laser beam is pulsed between three power levels. The higher power level melts the material, the intermediate power level heats the material to just below the melting point and above the crystallization temperature, and the lower level is used to control the heating and cooling of the material. The phase-change material, the multi-layer structure of the recording element, and the laser pulse sequence are all carefully designed to ensure that the material melted by the high power laser pulse is cooled quickly to quench in the amorphous state. The same design allows the intermediate power pulses to heat the material to just below the melting point and crystallize the material. Thus by alternating the write laser pulses between the power levels one can produce alternate crystalline and amorphous regions on the recording element, and this is how information is stored.

A critical material property of the phase-change material is therefore the temperature dependence of crystallization rate. This rate has to be high enough to allow crystallization to complete within the very short time when the material is heated by the intermediate level laser pulse; at the same time it has to be low enough to allow the material to be quenched into the amorphous phase after the material is melted by the high power laser; and furthermore it has to be low enough at room temperatures to ensure the stability of the recorded amorphous marks for many years. The eutectic GeTe type alloys were first investigated and was found extremely difficult to achieve the desired properties. In particular, the crystallization rate was too low to allow laser re-crystallization. It was later suggested that long range diffusion associated with phase-segregation during the solidification and crystallization process was responsible for the slow crystallization rate (M. Chen, K.A. Rubin, and R.W. Barton Appl. Phys. Lett.49(9), 1, P502(1986)). To achieve high crystallization, materials based on single-phase stoichiometric compounds or solution of compounds were suggested to be necessary. Most of the recent efforts have since been focused on such materials. In particular, a pseudo-binary GeTe-Sb₂Te₃ system and a system based on Sb-AgInTe₂ were intensively developed.

Not all the phase-change materials described in the prior art have data stable properties, however. Commonly assigned US-A-5,015,548, for example, described optical recording materials based on Sb₁₋ₓTeₓ alloys. These alloys can provide excellent recording performance and chemical stability and are therefore very attractive for constructing recording elements. It was later discovered, however, that the recorded data can disappear after a 16 hours heating at 80°C. US-A-5,818,808 and Japanese Patent Application J60,177,446 disclosed the addition of a third element from a very long list of elements to the Sb₁₋ₓTeₓ alloys to improve its stability. However, most of the suggested elements do not provide adequate stability improvement. Furthermore, the addition of dopants changes the behavior of the alloys. For some dopants, the recording performance is significantly degraded. For the two elements, Ge and In, that could provide stability and good recording performance, the applicable composition range is much narrower than suggested in the prior art EP0834874A3 and M. Horie, and others (M. Horie, N. Nobukuni, K. Kiyono, and T. Ohno: 2000 Optical Data Storage Conference Digest IEEE Catalog #00^{TH}8491, Post Deadline Paper, Page PD 1, May 2000, Whistler, British Columbia, Canada).

It is the object of the present invention to provide a rewriteable optical element of the phase-change type that can be used for high performance, high density recording and that has data-stable properties.

This object is achieved by an optical rewritable recording element of the phase-change type having a data-stable temperature of at least 110°C, comprising:
(a) a substrate; and
(b) a phase-change recording layer having a composition within a depicted polygon in the following ternary composition diagram of antimony, tellurium, and indium; wherein the polygon has the following vertices and corresponding coordinates are in atomic percent:

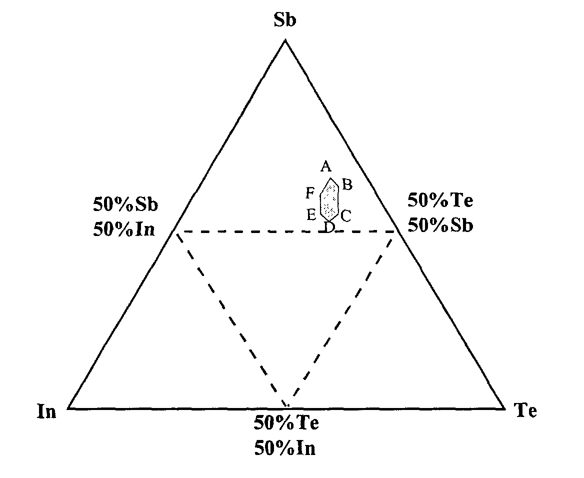

| Vertices | Coordinates | | |
|---|---|---|---|
| | In % | Te% | Sb% |
| A | 9.0 | 28.0 | 63.0 |
| B | 9.0 | 30.0 | 61.0 |
| C | 13.0 | 34.0 | 53.0 |
| D | 16.0 | 33.0 | 51.0 |
| E | 16.0 | 30.0 | 54.0 |
| F | 13.5 | 27.5 | 59.0 |

FIG. 1 is a schematic view of a four layer rewriteable recording element of the phase-change type;
FIG. 2 shows the calculated data-stability temperature as a function of the activation energy of a phase-change material for 30 years data lifetime;
FIG.3 shows the dependence of data stability temperature on concentration of In doped samples;
FIG.4 shows the dependence of jitter performance on concentration of In doped samples;
FIG. 5 shows the preferred composition range for In doped SbTe alloys;
FIG. 6 shows the dependence of data stability temperature on concentration of various dopants;
FIG.7 shows the dependence of jitter performance on Co dopant concentration;
FIG.8 shows the dependence of jitter performance on Cr dopant concentration; and
FIG. 9 shows the dependence of reflectivity on Si concentration.

It was discovered the published equilibrium phase-diagrams can not be used as a guide to judge the absence or presence of phase-separation. To achieve thermodynamic equilibrium, materials need sometimes be annealed at elevated temperatures for days and even months. The time available for crystallization to complete during an optical recording operation, on the other hand, is typically less than a fraction of a micro-second. The resulting crystalline phase is often a metastable phase that can not be found in the standard phase-diagrams. It was based on this realization, the present inventors investigated a large number of non-stoichiometric alloy system in search of a good phase-change media. One of the most promising system found was based on Sb-Te binary alloys in the composition range of 58-75% Sb (US-A-5,015,548). The published equilibrium diagram for Sb-Te shows either an eutectic system with eutectic composition of 70% Sb, or a peritectic system with a single β-phase having a broad composition range around 70% Sb. Difficulty in achieving equilibrium in this alloy is the cause of the confusion. To obtain the β-phase the samples needed to be annealed for months at just below the solidus curve. Phase-diagrams obtained this way are irrelevant to the optical recording process. X-ray diffraction of the laser crystallized Sb-Te films clearly showed a single phase of NaCl structure over the useful composition range. This NaCl structure has never been reported in any studies of the Sb-Te binary phase diagrams. The ability of the alloy to crystallize into this metastable single-phase structure accounts for its fast crystallization rate during laser recording. The crystallization rate, however, was found to depend strongly on the Sb/Te ratio: the higher the ratio, the faster the crystallization rate. With about 70% Sb, the crystallization time is about 100 nS and this rate is appropriate for CD or DVD type recording. Indeed, excellent recording performance has been achieved.

It was later discovered, however, that although good recording performance could be achieved using the binary Sb-Te alloy, the data mark stability was inadequate.

Because the amorphous phase is not stable, spontaneous crystallization eventually takes place at room temperatures. When this happens, recorded amorphous spots crystallize, and the recorded data are lost. For phase-change disks the spontaneous crystallization of amorphous spots can be the lifetime limiting degradation mechanism. It is therefore important to use phase-change materials whose rate of crystallization is sufficiently slow at room temperatures to ensure that such spontaneous crystallization does not take place during the expected 30 years of disk lifetime.

The crystallization rate of recorded marks is drastically different from that of the unrecorded films. Two major effects are causing this difference. The first one relates to the fact that the as deposited amorphous state has different physical structure from that of the melt-quenched amorphous state. The other relates to the fact that the melt-quenched amorphous data spots are surrounded by crystalline regions. These crystalline regions can act as nucleation sites to promote crystallization. Because of these two effects, the melted quenched amorphous data spots are usually less stable than the as-deposited amorphous films. To study lifetime, it is therefore necessary to study the stability of the recorded data directly and not just the unrecorded amorphous phase-change films.

Since the crystallization process is highly temperature dependent, a preferred procedure for studying lifetime is to study the rate of data degradation at several elevated temperatures where the rate is high enough to allow convenient observation. These results are then extrapolated to lower temperatures for lifetime prediction. This procedure, however, is not practical for the situation under consideration. A reliable estimation of data lifetime needs to be carried out on real optical disks on real recorded data. The substrate material in most optical disks, however, is polycarbonate, a material that has a glass transition temperature not much above 100°C. Heating the material close to the glass transition temperature causes the substrate to deform and the measurement of readout performance not reliable. At lower temperatures the degradation rates are too slow to allow efficient observation. A simplified procedure is therefore devised. Samples of various compositions are heated for a fixed length of time at various elevated temperatures. The samples are then checked for visual degradation of the recorded marks. Since visual inspection can be performed on deformed samples, this procedure allows experiments to be carried out at higher temperatures to allow accelerated studies. The maximum temperature at which no visible degradation of the recorded marks is observed is recorded as the "data-stable temperature" of the material. It is to be noted, however, that the actual readout signal can show significant degradation before mark degradation becomes visible. For a disk that shows visible degradation of recorded marks after a 16 hours heat treatment, unacceptable jitter degradation can be observed after 4 hours of heating at the same temperature. A recording element that shows no visual degradation after 16 hour heat treatment at or below 100°C, for example, is therefore considered to have a data-stable temperature of 100°C for 4 hours data life.

This procedure, however, only determines the lifetime of a material at a single temperature. To determine the lifetime at several different temperatures to allow lifetime prediction at room temperature, the above experiment has to be repeated covering several orders of magnitude of heat treatment time periods. The experiment becomes extremely time consuming. Instead, a different approach is again devised.

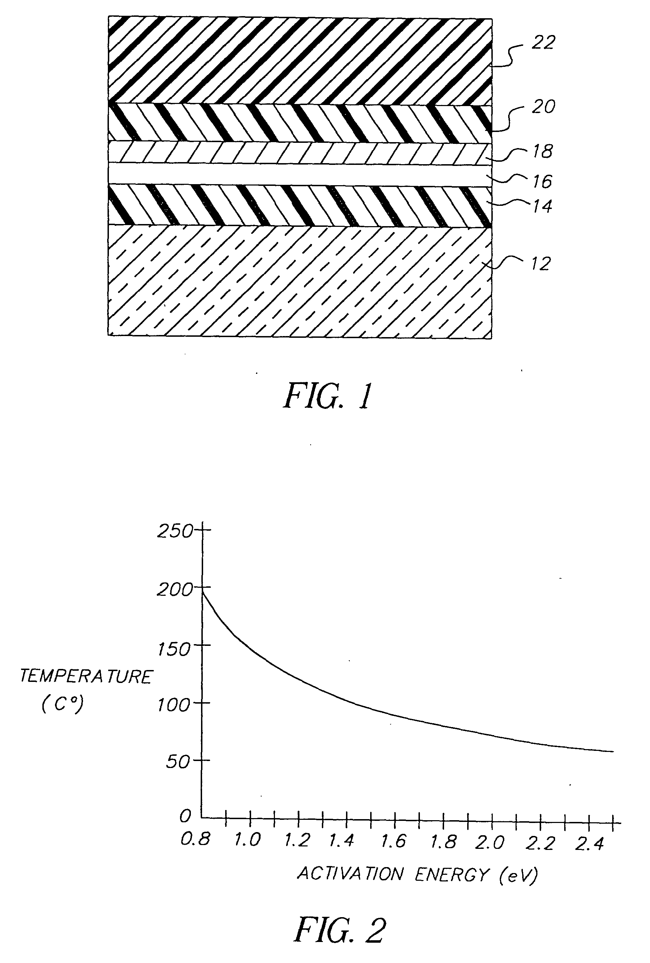

For most applications, a thirty-year data lifetime is considered adequate. In other words, the recorded data needs to be stable at room temperature for over thirty years. At elevated temperatures the lifetime will be shorter, and at the data-stable temperature as defined above, the data lifetime is equal to four hours. For the same thirty-year lifetime at room temperature, the required data-stable temperature depends on the activation energy of the material. The lower the activation energy the higher the data-stable temperature has to be in order to guarantee a thirty year lifetime at room temperature. The calculated dependence of data-stable temperature versus activation energy is shown in FIG. 2. For an activation energy of 1.3 eV, for example, the marks need to be stable at 110°C in order to have a data lifetime of 30 years at room temperature. Since phase-change materials with such low activation energy have been reported, it is wise to select materials that have even higher data-stable temperatures to ensure stability of the recorded marks. For the purpose of this invention, a stable element is defined as one that has a data-stable temperature of at least 110°C.

Turning to FIG.1 there is shown a rewriteable optical element 10 of the phase-change type according to the current invention which includes a transparent substrate 12, a dielectric layer 14, a phase-change recording layer 16, a second dielectric layer 18, a reflector layer 20, and a protective lacquer layer 22. Optionally, element can be bonded to another similar element of the same construction to form a double-sided element or to an un-coated substrate to form a laminated element.

Preferably, the substrate 12 is made of a transparent material such as polycarbonate and, preferably, the substrate is made by an injection molding process with one of the surfaces embossed with guide grooves and other features for tracking, addressing, and other purposes during recording. All layers are coated on the surface with the embossed features. Layers 14 and 18 are made of transparent dielectric materials and can be selected from a variety of materials including oxides, nitrides, and sulfides of metals and semimetals such as Al, Si, Zn, Ge, Sn, and so forth. A preferred dielectric material is a mixture of SiO₂ and ZnS with 10:90 or 20:80 concentration ratio. The reflector layer 20 can be selected from a variety of metals or metal alloys including Au, Cu, Al, and Ag. The preferred reflector includes Al alloys with 1 to 5 % of Cr or Ti. The dielectric layers and the reflector layer are preferably prepared by sputtering.

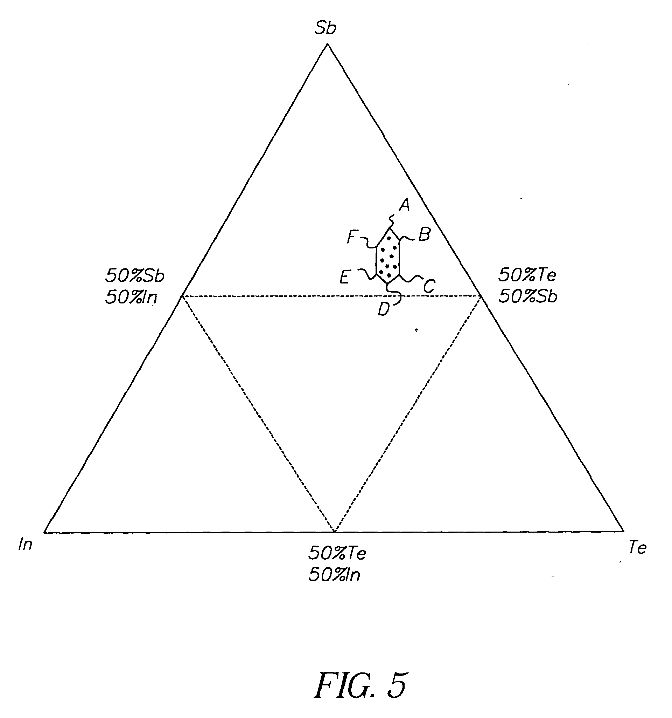

The phase-change recording layer 16 can be constructed to include a ternary alloy of antimony, tellurium, and indium. In this case, the composition of the alloy is within a polygon ABCDEF in the ternary composition diagram of antimony, tellurium, and indium, FIG. 5, wherein the vertices of the polygon have the following coordinates in atomic percent:

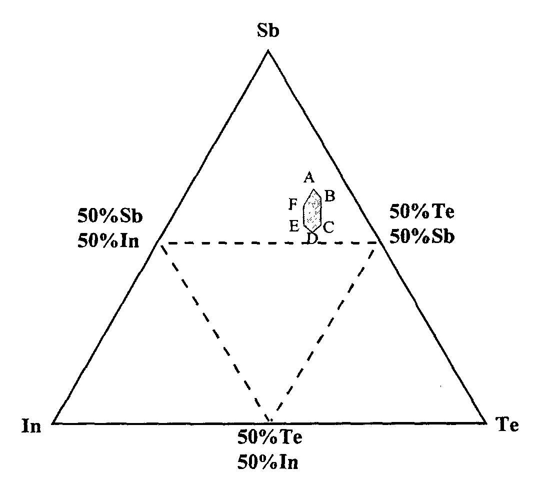

| Vertices | Coordinates | | |
|---|---|---|---|
| | In % | Te % | Sb% |
| A | 9.0 | 28.0 | 63.0 |
| B | 9.0 | 30.0 | 61.0 |
| C | 13.0 | 34.0 | 53.0 |
| D | 16.0 | 33.0 | 51.0 |
| E | 16.0 | 30.0 | 54.0 |
| F | 13.5 | 27.5 | 59.0 |

It was discovered after an extensive studies of the (Sb_{100-y}Te_{y})₁₀₀₋ₓMₓ alloys, wherein M is a third element dopant selected from the periodic table and 0.2 < Y < 0.5, that when In is selected as the dopant, within the limited range of compositions specified above there is provided adequate data stability and recording performance at DVD or higher densities. Other dopants with the exception of germanium have been found to be ineffective.

The recording layer 16 is prepared by sputtering. The thicknesses of the layers 12, 14, 16, 18, and 20 are selected for best optical and thermal tuning to achieve optimum recording and readout performance. For use with a 635 nm laser using a 0.6 NA objective, the typical thickness for the layers is 70 nm, 20 nm, 20 nm, and 100 nm, respectively.

The following examples are presented for a further understanding of the invention. It is understood, however, that other construction of the recording element utilizing the preferred phase-change material is possible and within the spirit of the current invention.

### Example 1:

A series of recording elements in the form of optical disks were made. Each disk had a unique composition represented by unique values of x's and y's in the formula (Sb_{100-y}Te_{y})₁₀₀₋ₓInₓ. The phase-change layers in these disks were fabricated by co-sputtering from a Sb_{100-y}Te_{y} target and an In target. By varying the composition of Sb_{100-y}Te_{y} targets used, samples with different y values were fabricated. By varying the relative sputtering powers to the two targets, samples with varying concentration of In, x, were fabricated.

Injection molded polycarbonate substrates with 0.6 mm thickness and one surface embossed with tracking grooves were used. Onto the grooved side of the substrates a 70 nm ZnS:SiO₂ (80:20) was sputtered as the first dielectric layer 14, followed by a 20 nm thick phase-change layer 16, a 20 nm ZnS:SiO₂ (80:20) second dielectric layer 18, and a 100 nm Al:Cr (1%) alloy layer as the reflector 20. A UV-curable lacquer layer was then spun on as the protective layer. The disks were then initialized by scanning an Ar laser spot over the surface the disks. The spot size was about 25 µm in diameter, the scanning speed was about 5 m/s, and the power used was about 300 mW.

The recording experiment was then performed on these disks. A commercial Pulstec DVD tester was used for the testing. The writing laser had a 635 nm wavelength and a 0.6 NA objective and the linear velocity of the media during testing was set to 3.49 m/s. A random EFM pattern was used as the data source with a data clock rate of 26.16 MHz. For the disk performance studies, the data-to-clock jitter was measured. This parameter, expressed in nanoseconds (nS), measures how precisely the data can be recorded and read back by the optical recording system. For the purpose of this study, a 4 nS data-to-clock value was considered adequate performance. Since the present invention concerns with the rewriteable disks, the data were overwritten 10 times before the jitter measurements were made.

For the data stability studies, a band of EFM ata was recorded on the disks. The width of the band was large enough so that the recorded data were visible to the naked eye. The disks were cut up into pie-shaped sections and the sections were heated on hot plates for 16 hours. The hot plates were set at constant temperatures ranging from 70°C to 140°C at 10 °C intervals. The sections were then examined after the heat treatment. The highest temperature at which no visible degradation of the marks was observed was recorded as the mark stability temperature. As discussed before, these temperatures were considered to be the temperatures at which the data can survive 4 hours without significant performance degradation.

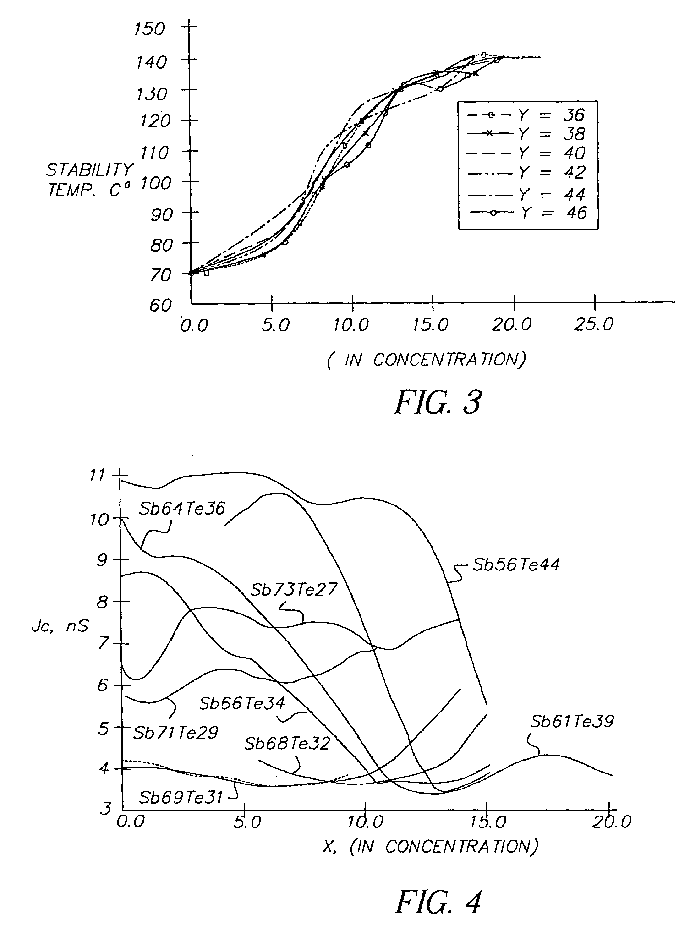

The results of the data stability experiment are summarized in FIG. 3. In this figure, the stability temperature was plotted as a function of In concentration, x. Two essential observations can be made from these results;
(1) The data-stability temperature is not a strong function of y in the formula (Sb_{100-y}Te_{y})₁₀₀₋ₓInₓ; and
(2) The data-stability temperature is a strong function of x in the above formula. When x > 9, the data-stable temperature is above 110°C. According to the analysis earlier, these disks are considered stable and have high probability of providing 30 years of lifetime for the recorded data.

The recording performance results are shown in FIG 4. In FIG. 4, the data-to-clock jitter values are plotted against x, the In concentration, for various y values. It is clear from this figure that the jitter performance was a strong function of both x and y values. For the required performance level of less than 4 nS jitter and an adequate stability, the y value has to be between about 30 and 40, and the x value range varies with y. The preferred composition range can be approximated by a polygon ABCDEF in the ternary composition diagram FIG 5 wherein the composition of the vertices are shown in TABLE 1. Here the composition of the alloy is represented by the formula Sb_{(100-a-b)}Te_{b}Inₐ wherein a, b, and (100 - a -b) are the percent concentration of In, Te, and Sb in the alloy, respectively.

**TABLE 1**

| Vertices | a = In% | b = Te% | (100-a-b)=Sb% |
|---|---|---|---|
| A | 9.0 | 28.0 | 63.0 |
| B | 9.0 | 30.0 | 61.0 |
| C | 13.0 | 34.0 | 53.0 |
| D | 16.0 | 33.0 | 51.0 |
| E | 16.0 | 30.0 | 54.0 |
| F | 13.5 | 27.5 | 59.0 |

### Comparative Example 1.

To study the effects of other dopants on the stability, many disks were fabricated. The general procedure used for disk fabrication and testing was identical to that described in example 1. Samples with different dopant concentrations were prepared by co-sputtering using a Sb_{100-y}Te_{y} target and a target of the dopant element. The composition of the alloys are represented by the formula (Sb_{1-y}Te_{y})₁₋ₓMₓ wherein M represent the dopant used.

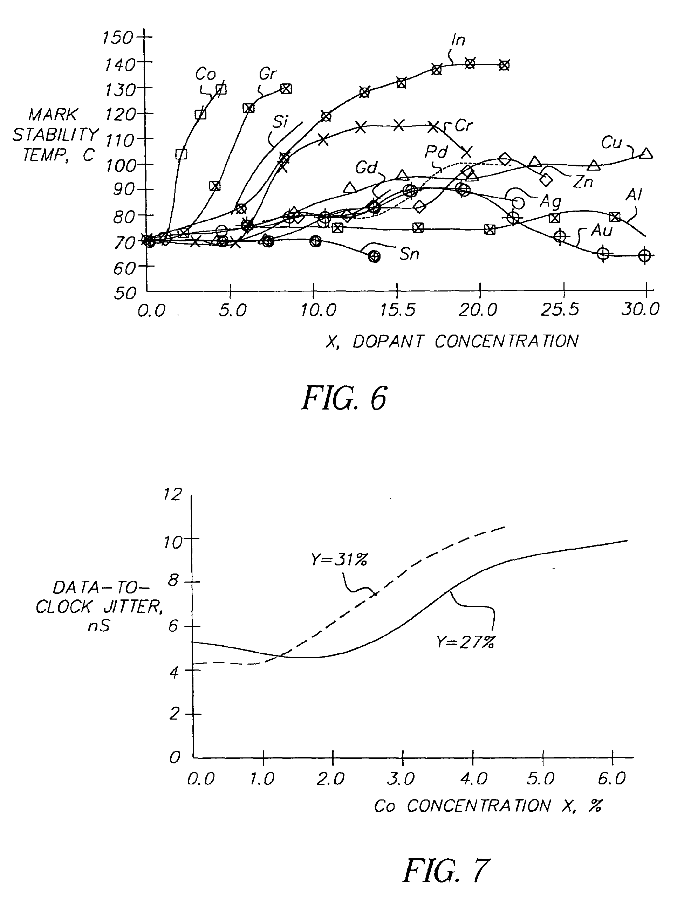

For each dopant investigated, at least one series of disks with varying dopant concentration, x, was investigated. For several of the dopants, two or more series with different y values were investigated. In all these cases, the stability was found to be at most weakly dependant on the y values. For ease of comparison, therefore, when more than one series of disks were investigated only the averaged values were presented. The results on the data stability are summarized in FIG. 6 along with the averaged data for the In and the Ge dopants.

It is clear from this figure that most dopants could not provide the needed stability. The list includes Au, Al, Ag, Cu, Zn, Pd, Gd, and Sn. Even though most of these dopants, with the exception of Sn, improved the stability to some degree, the data stability temperature was less than 110°C even at high concentrations. The Sn dopant actually made the data marks less stable. These dopants are therefore deemed unsuitable for fabrication of stable recording elements.

A few dopants, including Co, Si, and Cr, did provide adequate stability improvement. These dopants were further examined for recording performance in the examples that follow.

### Comparative Example 2.

Co doped disks used in Comparative Example 1 were tested for recording performance. Co doping was found to be very effective in improving the mark stability. This improvement in mark stability, however, was accompanied by a sharp increase in erasure time. As a result, the recording performance, and particularly the performance of over-writing, is severely deteriorated. In addition, Co doping makes initialization very difficult. We were unable to initialize the film when the Co concentration, x, exceeds five percent. The results on data-to-clock jitter for 10X overwrite data are shown in FIG. 7.

### Comparative Example 3

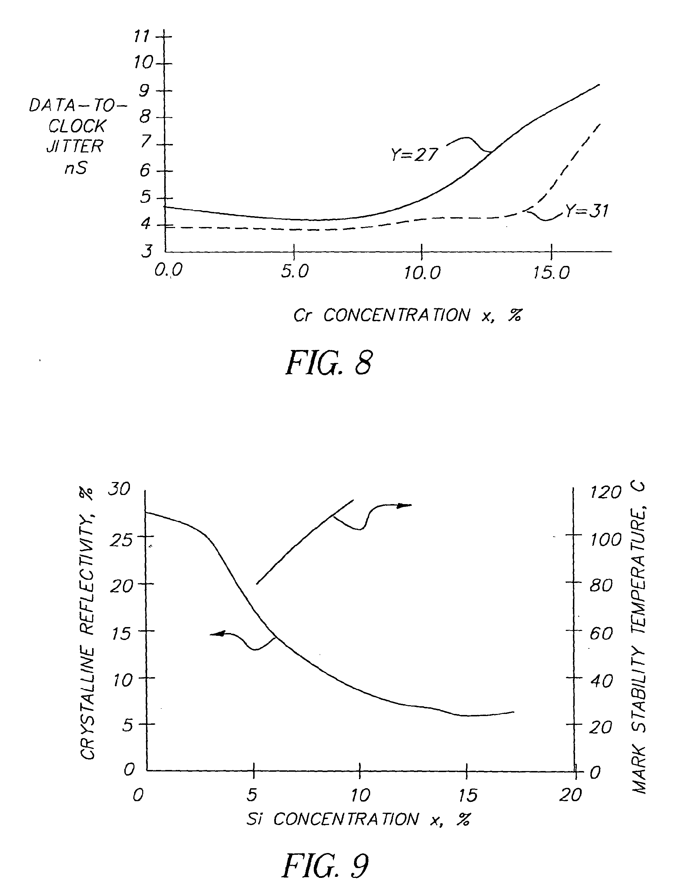

Cr doped disks used in Comparative Example 1 were tested for recording performance and the results are shown in FIG.8. FIG. 6 shows that it takes about 10% Cr to increase the data-stable temperature to above 110°C. Results in FIG. 8 show that when the concentration of Cr was increased to about 10%, the data-to-clock jitter value deteriorated rapidly. Cr is therefore not a suitable dopant for making high performance, high stability optical disks.

### Comparative Example 4

Although Si doping was able to increase- the data-stability temperature to above 110°C when the concentration was increased to about 9%, the addition of Si made initialization of the phase-change difficult. In fact it was almost not possible to initialize the film when the concentration was increased to over 10%. In addition, Si rapidly decreased the reflectivity of the initialized crystalline phase (FIG. 9). With over 10% Si, the reflectivity of the initialized phase and un-initialized phase became almost identical. The reflectivity decrease reduced the readout contrast between the written and unwritten region and also made focusing and tracking difficult for the recording and playback processes. Si is therefore not an appropriate dopant for making high performance, high stability disks.

## Claims

1. An optical rewritable recording element of the phase-change type having a data-stable temperature of at least 110°C, comprising:
(a) a substrate; and
(b) a phase-change recording layer having a composition within a depicted polygon in the following ternary composition diagram of antimony, tellurium, and indium; wherein the polygon has the following vertices and corresponding coordinates are in atomic percent: 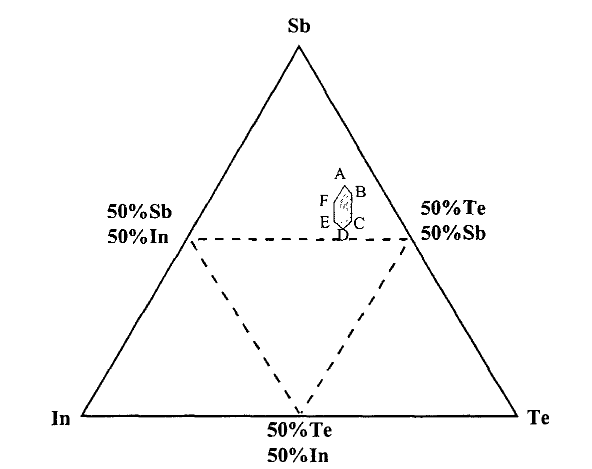
| Vertices | Coordinates | | |
|---|---|---|---|
| | In % | Te % | Sb% |
| A | 9.0 | 28.0 | 63.0 |
| B | 9.0 | 30.0 | 61.0 |
| C | 13.0 | 34.0 | 53.0 |
| D | 16.0 | 33.0 | 51.0 |
| E | 16.0 | 30.0 | 54.0 |
| F | 13.5 | 27.5 | 59.0 |
